# EUROPÄISCHE PATENTSCHRIFT

(11) **EP 3 747 538 B1**
(45) Veröffentlichungstag und Bekanntmachung des Hinweises auf die Patenterteilung: **20.05.2026**
(21) Anmeldenummer: 20176878.5
(22) Anmeldetag: 27.05.2020
(51) Int. Cl.: B01J 19/12, B01J 19/24, C02F 1/30, C02F 1/32

(54) **PHOTOREAKTOR UND PHOTOREAKTORSYSTEM MIT PHOTOREAKTOR**
PHOTOREACTOR AND PHOTOREACTOR SYSTEM WITH PHOTOREACTOR
PHOTORÉACTEUR ET SYSTÈME DE PHOTORÉACTEUR POURVU DE PHOTORÉACTEUR

(30) Priorität: 27.05.2019 DE 102019114168
(43) Veröffentlichungstag der Anmeldung: 09.12.2020
(73) Patentinhaber: Rheinisch-Westfälische Technische Hochschule (RWTH) Aachen, 52056 Aachen (DE)
(72) Erfinder: LIAUW, Marcellus Andreas, 52134 Herzogenrath (DE); RÖßLER, Martin, 52134 Herzogenrath (DE)
(74) Vertreter: Michalski Hüttermann & Partner Patentanwälte mbB

(56) Entgegenhaltungen:
- EP-A1- 3 126 052
- EP-A1- 3 228 374
- EP-A1- 3 279 150
- EP-A1- 3 409 352
- WO-A1-2017/181125
- WO-A2-98/46933
- DE-A1- 102014 012 219
- US-A- 4 482 809
- US-A1- 2003 232 540
- US-A1- 2013 026 682
- US-A1- 2015 175 531
- US-A1- 2015 314 024

## Beschreibung

Die Erfindung betrifft ein Photoreaktorsystem mit einem Photoreaktor für strahleninduzierte Reaktionen in einem Medium, der Photoreaktor aufweisend (i) einen sich entlang einer Achse erstreckenden hülsenartigen Grundkörper, (ii) eine Mehrzahl von LED-Beleuchtungskörpern, die am Innenumfang des hülsenartigen Grundkörpers umfänglich um die Achse herum angeordnet sind und (iii) einen von den LED-Beleuchtungskörpern umfänglich umgebenen Freiraum für mindestens ein Reaktionsgefäß zur statischen Aufnahme des Mediums und/oder zur dynamischen Führung des Mediums.

Die Druckschrift WO 2017/181125 A1 zeigt einen Photoreaktor, der konkret als Photokatalytischer Reaktor für die Wasseraufbereitung ausgebildet ist und (i) einen sich entlang einer Achse erstreckenden hülsenartigen Grundkörper, (ii) mehrere LED-Beleuchtungskörper, die am Innenumfang des hülsenartigen Grundkörpers umfänglich um die Achse herum angeordnet sind und (iii) einen von den LED-Beleuchtungskörpern umfänglich umgebenen Raum aufweist, in dem ein Reaktionsgefäß zur dynamischen Führung des Mediums angeordnet ist. Die LED-Beleuchtungskörper wie auch das Reaktionsgefäß sind fest installiert.

Neben solchen konkreten Anwendungen gewinnen auch Laboranwendungen immer weiter an Bedeutung. Auf Grund der Verwendung von Licht (Photonen) als umweltfreundlichem und nachhaltigem Aktvierungsreagenz konnte die Photoredoxkatalyse in den vergangenen Jahren zunehmend an Interesse in den verschiedensten Bereichen der organischen- sowie der Polymerchemie gewinnen. Zum heutigen Zeitpunkt gilt die Photoredoxkatalyse als zentraler Zweig der aktuellen Forschung. Die Durchführung derartiger Reaktionen setzt jedoch die Verwendung spezieller Ausstattung voraus. Diese geht bis jetzt mit hohen Investitionskosten oder einem überproportional großen umbauten Volumen einher. Auf Grund dessen steht eine derartige Ausstattung nur in wenigen Laboratorien zur Verfügung.

Die Druckschriften US 2015/314024 A1, DE 10 2014 012219 A1, US 2013/026682 A1, US 2015/175531 A1, WO 98/46933 A2, US 4 482 809 A und US 2003/232540 A1 zeigen weitere Photoreaktoren der genannten Art für verschiedenste Anwendungen. EP 3 126 052 A1 zeigt ein System für biochemische Reaktionen.

Es ist Aufgabe der Erfindung ein Photoreaktorsystem anzugeben, bei dem sich der Photoreaktor flexibel an individuelle Anforderungen, insbesondere bei Laboranwendungen, anpassen lässt.

Die Lösung der Aufgabe erfolgt erfindungsgemäß durch die Merkmale des unabhängigen Anspruchs 1. Bevorzugte Ausgestaltungen der Erfindung sind in den Unteransprüchen angegeben, die jeweils einzeln oder in Kombination einen Aspekt der Erfindung darstellen können.

Bei dem erfindungsgemäßen Photoreaktorsystem mit einem Photoreaktor für strahleninduzierte Reaktionen in einem Medium, welcher (i) einen sich entlang einer Achse erstreckenden hülsenartigen Grundkörper, (ii) eine Mehrzahl von LED-Beleuchtungskörpern, die am Innenumfang des hülsenartigen Grundkörpers umfänglich um die Achse herum angeordnet sind, (iii) einen von den LED-Beleuchtungskörpern umfänglich umgebenen Freiraum für mindestens ein Reaktionsgefäß zur statischen Aufnahme des Mediums und/oder zur dynamischen Führung des Mediums aufweist, ist vorgesehen, dass das Photoreaktorsystem einem Satz von Halteelementen zum Halten von unterschiedlich ausgestalteten Reaktionsgefäßen für die statische Aufnahme eines Mediums und/oder die dynamische Führung eines Mediums aufweist, wobei ein jedes der Halteelemente aus dem Satz von Halteelementen zum Halten des mindestens einen Reaktionsgefäßes in den Freiraum hinein über einen Bajonett-Verschlussmechanismus an einem Ende des Grundkörpers lösbar befestigbar ist. Der Photoreaktor weist eine mit Luft als Kühlfluid arbeitende Druckluft-Kühleinrichtung für die LED-Beleuchtungskörper mit im hülsenartigen Grundkörper ausgebildeten Kühlkanälen für das Kühlfluid auf.

Mit anderen Worten erstreckt sich das vom jeweiligen Halteelement gehaltene mindestens einen Reaktionsgefäß in den Freiraum hinein, wobei über einen Satz von Halteelementen verschiedenartigst ausgestaltete Reaktionsgefäße in den Freiraum hinein gehalten werden, was die Flexibilität dieses Photoreaktors bzw. Photoreaktorsystems mit Photoreaktor und Satz von Halteelementen ausmacht.

Insbesondere ist vorgesehen, dass das Halteelement als Deckelelement ausgebildet ist, welches den Freiraum an dem einen Ende verschließt.

Mit Vorteil ist vorgesehen, dass das eine Ende des Grundkörpers von einem Trägerelement gebildet wird. Dazu ist dieses Trägerelement am Kopfende des Rests des Grundkörpers befestigt, insbesondere lösbar befestigt. Das Trägerelement ist dabei eine Art Deckel des Grundkörpers, der den Grundkörper an dem einen Ende verschließt.

Erfindungsgemäß ist vorgesehen, dass das Halteelement über einen Bajonett-Verschlussmechanismus an dem einen Ende des Grundkörpers, also insbesondere an dem Trägerelement, befestigbar/befestigt ist. Ein Bajonettverschluss ist eine schnell herstell- und lösbare mechanische Verbindung zweier Teile. Die Teile werden durch Ineinanderstecken von Verbindungselementen und entgegengesetztes Drehen bezüglich einer Längsachse verbunden und so auch wieder getrennt. Die Verbindungselemente weisen Verbindungsstrukturen zur Bildung einer Vorsprung-Hintergriff-Anordnung auf. Das Halteelement weist dazu Vorsprung- oder Hintergriff-Strukturen auf. Das Ende des Grundkörpers entsprechende Hintergriff - oder Vorsprung-Strukturen. Die hier bevorzugt verwendete Ausführungsform des Bajonett-Verschlusses ist beispielsweise von Kameras/Fotoapparaten bekannt.

Erfindungsgemäß weist der Photoreaktor eine Kühleinrichtung für die LED-Beleuchtungskörper mit im hülsenartigen Grundkörper ausgebildeten Kühlkanälen für ein Kühlfluid der Kühleinrichtung auf.

Dabei ist vorgesehen, dass die Kühleinrichtung eine Druckluft-Kühleinrichtung ist. Bei dem Kühlmittel/Kühlfluid "Luft" ergeben sich keine größeren Probleme bei Auftreten einer Leckage.

Gemäß einer weiteren bevorzugten Ausgestaltung der Erfindung ist vorgesehen, dass am anderen Ende des hülsenartigen Grundkörpers ein den Freiraum an diesem anderen Ende verschließendes Bodenelement des Photoreaktors angeordnet ist.

Dabei ist insbesondere vorgesehen, dass im Bodenelement ein Verteilungssystem zur Verteilung des Kühlfluids auf die Kühlkanäle ausgebildet ist.

Gemäß einer bevorzugten Ausführungsform der Erfindung ist vorgesehen, dass die Kühleinrichtung zumindest einen Strömungspfad für das Kühlfluid ausbildet, bei dem das Kühlfluid in Strömungsrichtung zunächst zur Kühlung von zumindest einem der LED-Beleuchtungskörper an diesem vorbeigeführt wird und anschließend den Freiraum passiert. Insbesondere wird dabei das Kühlfluid über das Bodenelement auf mindestens einen die LED-Beleuchtungskörper tragenden/haltenden Träger geleitet und anschließend weiter in den Reaktorinnenraum befördert, wo es in den Freiraum gelangt um dort gegebenenfalls das Reaktionsgefäß oder zumindest eines der Reaktionsgefäße zu kühlen. Des Weiteren weist der Photoreaktor auch einen Auslass für das Kühlfluid auf. Dieser befindet sich dann bevorzugt an einem Ende des Reaktors. Das Kühlfluid ist -wie bereits erwähnt- insbesondere Druckluft.

Gemäß noch einer bevorzugten Ausführungsform der Erfindung ist vorgesehen, dass der hülsenartigen Grundkörper ein per 3D-Druckverfahren hergestellter Grundkörper und/oder das das Bodenelement ein per 3D-Druckverfahren hergestelltes Bodenelement ist.

Gemäß einer weiteren bevorzugten Ausführungsform der Erfindung ist vorgesehen, dass der Photoreaktor weiterhin einen zwischen den LED-Beleuchtungskörpern und dem Freiraum angeordneten rohrförmigen Reflektorschirm aufweist, bei dem auf Höhe der einzelnen LED-Beleuchtungskörper jeweils Aussparungen ausgebildet sind.

Schließlich weist der Photoreaktor insbesondere auch das mindestens eine Reaktionsgefäß selbst auf.

Das erfindungsgemäße Photoreaktorsystem mit einem vorstehend genannten Photoreaktor weist also einen ganzen Satz von Halteelementen zum Halten von unterschiedlichen Reaktionsgefäßen auf, wobei dieser Satz das im Zusammenhang mit dem Photoreaktor genannte Halteelement umfasst.

Nachfolgend wird die Erfindung unter Bezugnahme auf die anliegenden Zeichnungen anhand von bevorzugten Ausführungsbeispielen exemplarisch erläutert, wobei die nachfolgend dargestellten Merkmale sowohl jeweils einzeln als auch in Kombination einen Aspekt der Erfindung darstellen können. Es zeigen:
Fig. 1 einen Photoreaktor gemäß einer bevorzugten Ausgestaltung der Erfindung in einer Explosionsdarstellung,
Fig. 2 sechs lösbar befestigbare Halteelemente zum jeweiligen Halten von verschiedenartigen Reaktionsgefäßen,
Fig. 3 ein Bodenelement des in Fig. 1 gezeigten Photoreaktors in einer Teil-Schnittdarstellung und
Fig. 4 weitere Details eines Grundkörpers des in Fig. 1 gezeigten Photoreaktors.

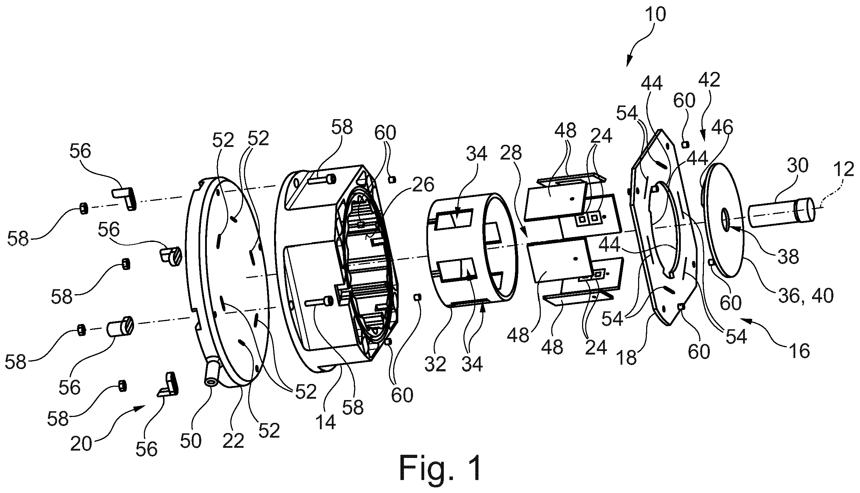

Die Fig. 1 zeigt einen modular aufgebauten Photoreaktor 10 für strahleninduzierte Reaktionen in einem Medium in einer Explosionsdarstellung. Dieser Photoreaktor 10 umfasst die folgenden Komponenten:
- einen sich entlang einer Achse 12 erstreckenden hülsenartigen Grundkörper 14, dessen eines Ende 16 von einem ringscheibenförmigen Trägerelement 18 gebildet wird,
- ein das andere Ende 20 des hülsenartigen Grundkörpers 14 verschließendes Bodenelement 22,
- eine Mehrzahl von LED-Beleuchtungskörpern 24, die am Innenumfang 26 des hülsenartigen Grundkörpers 14 umfänglich um die Achse 12 herum angeordnet sind,
- einen von den LED-Beleuchtungskörpern 24 umfänglich umgebenen achsnahen Freiraum 28 für mindestens ein Reaktionsgefäß 30 zur statischen Aufnahme des Mediums und/oder zur dynamischen Führung des Mediums,
- einen zwischen den LED-Beleuchtungskörpern 24 und dem Freiraum 28 angeordneten hülsenförmigen Reflektorschirm 32, bei dem auf Höhe der einzelnen LED-Beleuchtungskörper 24 jeweils Aussparungen 34 ausgebildet sind, durch die die LED-Beleuchtungskörper 24 den Freiraum 28 beleuchten können, und
- ein an dem einen Ende 16 des Grundkörpers lösbar befestigbares Halteelement 36 zum Halten des mindestens einen Reaktionsgefäßes 30 in den Freiraum 28 hinein.

Dabei weist das Halteelement 36 Haltestrukturen 38 für das/die Reaktionsgefäß(e) 30 auf und ist als den Freiraum 28 an dem einen Ende 16 verschließendes Deckelelement 40 ausgebildet. Das als Deckelelement 40 ausgebildete Halteelement 36 ist über einen Bajonett-Verschlussmechanismus 42 an dem (vom Trägerelement 18 gebildeten) einen Ende 16 des Grundkörpers 14 wieder lösbar befestigt. Trägerelement 18 und Halteelement 36 werden bei dem Verschlussmechanismus 42 durch Ineinanderstecken und entgegengesetztes Drehen bezüglich der Achse 14 verbunden und so auch wieder getrennt. Die beiden Elemente 18, 36 weisen Verbindungsstrukturen 44, 46 zur Bildung einer Vorsprung-Hintergriff-Anordnung auf. Das Trägerelement 18 an dem einen Ende 16 des Grundkörpers 14 weist dazu Hintergriff-Strukturen 44 auf. Das Halteelement 36 entsprechende Vorsprung-Strukturen 46.

Die LED-Beleuchtungskörper 24 sind auswechselbar am Innenumfang 26 des hülsenartigen Grundkörpers 14 befestigt. Dazu ist jeder der für eine Photoreaktion notwendigen LED-Beleuchtungskörper 24 auf einem jeweiligen Träger 48 platziert, sodass sich LED Arrays 24, 48 ergeben. Man kann hier somit auch von austauschbaren LED-Beleuchtungskörpern oder LED-Beleuchtungskörper-Modulen 24, 48 reden.

Der Photoreaktor 10 weist weiterhin eine Kühleinrichtung für die LED-Beleuchtungskörper 24 auf, von der man in Fig. 1 jedoch nur einen Kühlfluideinlass 50 am Bodenelement 22, Kühlmitteldurchtritte 52 vom Bodenelement 22 zum Grundkörper 14 und Kühlfluidaustritte 54 im Trägerelement 18 erkennen kann. Entsprechende im hülsenartigen Grundkörper 14 ausgebildete Kühlkanäle für das Kühlfluid sind nicht direkt erkennbar. Im Bodenelement 22 ist ein Verteilungssystem zur Verteilung des Kühlfluids auf die Kühlkanäle ausgebildet. Die Kühleinrichtung ist eine Druckluft-Kühleinrichtung, nutzt also (Druck-)Luft als Kühlfluid. Um den hülsenartigen Grundkörper 14 und das Bodenelement 22 mit entsprechenden Kanälen erstellen zu können, sind diese Komponenten 14, 22 im Beispiel per 3D-Druckverfahren hergestellt.

Bei einer leicht modifizierten Kühleinrichtung bildet diese Kühleinrichtung Strömungspfade für das Kühlfluid aus, bei denen das Kühlfluid in Strömungsrichtung zunächst zur Kühlung der LED-Beleuchtungskörper 24 durch deren zugeordnete Träger 48 an diesen Beleuchtungskörpern 24 vorbeigeführt wird und anschließend auch zusätzlich den Freiraum 28 passiert um dort das Reaktionsgefäß 30 bzw. die Reaktionsgefäße 30 zu kühlen. Weiterhin weist der Photoreaktor 10 auch mindestens einen Auslass für das Kühlfluid auf, über den das Kühlfluid den Photoreaktor 10 wieder verlässt. Dieser befindet sich dann bevorzugt an einem Ende des Photoreaktors 10.

Der in Fig. 1 gezeigte modulare Aufbau des Photoreaktors 10 ermöglicht den einfachen und kosteneffizienten Austausch der anzupassenden Komponenten LED Beleuchtungskörper 24 und Halteelement 36, während der Rest des Photoreaktors 10 unverändert beibehalten wird.

Im Gegensatz zu anderen Photoreaktoren 10 setzt das hier gezeigte Photoreaktor-System somit gezielt auf die Anpassungsfähigkeit der für Photoreaktionen wichtigsten Komponenten - die Beleuchtung sowie die Art der Reaktionsführung. Der modulare Aufbau ermöglicht den einfachen und kosteneffizienten Austausch der anzupassenden Komponenten 24, 30, während der Rest des Reaktorsystems unverändert beibehalten wird. Neben der Möglichkeit, die LED-Beleuchtungskörper 24 hinsichtlich ihrer Wellenlänge, Lichtintensität sowie ihrer Dimensionierung entsprechend den Anforderungen anzupassen, ist erstmalig die Durchführung von sowohl satzweisen als auch kontinuierlichen Reaktionen im gleichen Photoreaktor 10 möglich. Entsprechend der Adaptabilität des Photoreaktor-Systems lassen sich Erweiterungen des Funktionsumfangs sowohl zeit- als auch kosteneffizient realisieren.

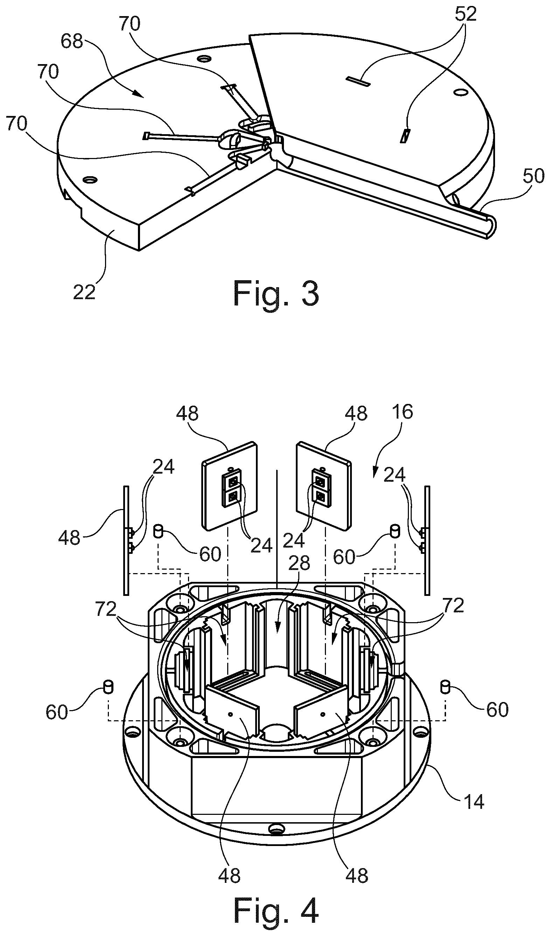

Mögliche Erweiterung (in Fig. 1 nicht gezeigt) stellen z.B. (i) die Erfassung der Lichtintensität mittels eines externen Radiometers, oder (ii) die Verwendung einer Küvette als Reaktionsgefäß (in Fig. 3 gezeigt) zur Reaktionsverfolgung mittels UV/Vis dar. Der Photoreaktor 10 wird dazu um die entsprechenden Komponenten erweitert.

Im Interesse einer einfachen sowie kostengünstigen Fertigung ist der überwiegende Anteil aller Komponenten als 3D-Druckteile ausgelegt. Der hier gezeigte Photoreaktor 10 ist ein neuartiger Reaktor 10 zur Durchführung photokatalytischer Reaktionen im Labormaßstab. Er bietet dem Anwender eine neue, attraktive Möglichkeit der sicheren, reproduzierbaren sowie adaptiven Ausübung von photokatalytischen Reaktionen.

Der Photoreaktor 10 besteht aus den bereits genannten Komponenten, welche durch einfache und robuste Schraub- und/oder Steckverbindungen untereinander befestigt werden, wie in Fig. 1 gezeigt. Die für eine Photoreaktion notwendigen LED-Beleuchtungskörper 24 sind hier im Beispiel auf insgesamt sechs Trägern 48 platziert (LED Arrays). Die Träger 48 sind hierbei so dimensioniert, dass sie verschiedenste Bauformen von LED-Beleuchtungskörpern 24 aufnehmen können. Neben kostengünstigen LED-Stripes ist auch die Verwendung von Hochleistungs-SMD-LEDs vorgesehen. Trotz ihres hohen Wirkungsgrades (rund 40- 50% bei aktuellen Modellen) wandeln Leuchtdioden einen Teil der elektrischen Leistung in Wärme um. Diese gilt es effektiv abzuführen, um nicht nur die Dioden vor Überhitzung zu schützen, sondern auch zur Prävention vor unkontrollierter Erhitzung des Reaktionsmediums. Zur effektiven Wärmeabfuhr sind die Träger 48 aus Aluminium, einem leichten Material mit hoher Wärmeleitfähigkeit, gefertigt. Zusätzlich wird die Betriebstemperatur der LEDs durch einen gezielten Luftstrom der Druckluft-Kühleinrichtung konstant gehalten.

Die LED Arrays 24, 48, also die Träger 48 mit den LED-Beleuchtungskörpern 24, werden anschließend, durch Einschieben, im Grundkörper 14 platziert. Dies ermöglicht sowohl einen schnellen Wechsel der Träger (Platinen) 48 als auch eine reproduzierbare Fixierung der Beleuchtungskörper 24. Die Verwendung von insgesamt sechs Trägern 48 entlang der Kanten eines Sechsecks gewährleistet eine homogene Lichtverteilung innerhalb des Reaktorvolumens, also des Freiraums 28. Für eine effiziente Energienutzung ist es ratsam, alle Photonen, welche das Reaktionsmedium nicht direkt treffen, wieder auf das Medium zu reflektieren. Zu diesem Zweck ist der Reflektorschirm 32 vorgesehen. Dieser besitzt auf der Innenseite eine spiegelnde oder diffus reflektierende Oberfläche, sodass ein homogeneres Beleuchtungsfeld erreicht wird. Darüber hinaus beschreibt der Reflektorschirm 32 einen abgeschlossenen Bilanzraum, was die Möglichkeit eröffnet, eine vollständige Bilanzierung der Photonen vorzunehmen.

Damit der Photoreaktor 10 mit einer Vielzahl von Magnetrührplatten mit unterschiedlichen Durchmessern kompatibel ist, besitzt er an dem als Unterseite fungierenden anderen Ende 20 verstellbare Befestigungsklemmen 56, die über Verschraubungen 58 am Bodenelement 22 befestigt sind. Diese Befestigungsklemmen 56 können entsprechend der genutzten Magnetrührplatte justiert werden, um somit eine reproduzierbare Position auf dem Magnetrührer sowie einen sicheren Halt zu gewährleisten.

Das ringscheibenförmige Trägerelement 18 an dem einen Ende 16 des hülsenartigen Grundkörpers 14 ist an einer Basiseinheit des Grundkörpers 14 über Magnetbefestigungen 60 lösbar befestigt. Das Trägerelement 18 ist also eine Art Deckel für die Basiseinheit des Grundkörpers 14.

Die flexible Anpassung des Photoreaktors 10 an die gewünschte Reaktionsführung erfolgt somit mit Hilfe eines von dem Trägerelement 18 und dem als Deckelelement 40 ausgebildeten Halteelement 36 gebildeten zweiteiligen Gehäusedeckels 18, 36. Die beiden Elemente 18, 36 sind dabei per Bajonettverschluss miteinander lösbar verbunden. Hierbei trägt der innere Teil des Deckels 18, 36, nämlich das Halteelement 36, die austauschbare Funktionalität bezüglich des Reaktionsgefäßes 30 und der äußere Teil des Deckels 18, 36, nämlich das Trägerelement 18, die austauschbare Funktionalität bezüglich der LED Arrays 24, 48.

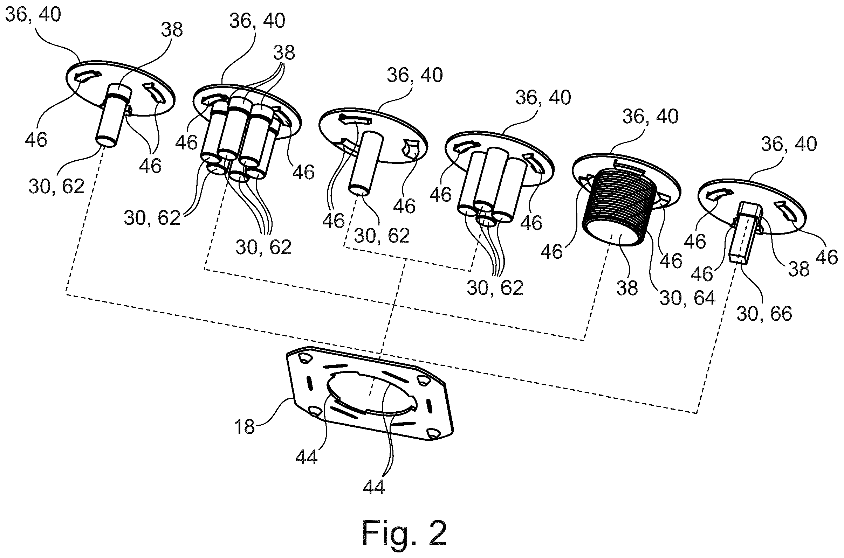

Die Fig. 2 zeigt verschiedene Ausführungsformen dieser als Deckelelemente 40 ausgebildeten Halteelemente 36. Neben einem Halteelemente 36 für eine einzelne batch-Reaktionsführung, also mit einer Haltestruktur 38 für ein einzelnes Reaktionsgefäß zur statischen Aufnahme des Mediums 62, ist auch ein Halteelemente 36 für eine multi-batch Reaktionsführung für bis zu sechs Reaktionsgefäßen, also mit mehreren Haltestrukturen 38 für mehrere (hier sechs) Reaktionsgefäße 30, gezeigt (Fig. 2 - erste vier Beispiele links). Hierzu ist das System derzeit mit allen gängigen Probenflaschen (3 - 10 ml) kompatibel. Eine Erweiterung der Kompatibilität bedarf lediglich der Anpassung des Halteelements 36. Durch die Aufteilung des Deckels 18, 36 in zwei Komponenten muss zur Anpassung der Funktionalität lediglich der innere Teil 36 neu gestaltet und gefertigt werden. Hierdurch wird der Materialeinsatz sowie Fertigungszeit auf ein Minimum reduziert. Die Anfertigung eines neuen Halteelements 36 (Funktionsdeckels) benötigt im Durchschnitt zwei Stunden.

In der Photochemie bietet die Durchführung von kontinuierlichen Reaktionen vielerlei Vorteile gegenüber den herkömmlichen batch-Reaktionen. So werden bei kontinuierlichen Prozessen nicht nur höhere Durchsätze erzielt, sondern auch eine sichere Handhabung der Reagenzien sowie eine effizientere Bestrahlung des Mediums (auf Grund der verringerten Schichtdicke) gewährleistet. Zu diesem Zweck ermöglicht der vorgestellte Photoreaktor 10 dem Anwender einen einfachen Einstieg in die kontinuierliche Reaktionsführung. Anstelle der beim batch-Verfahren verwendeten Reaktionsgefäße zur statischen Aufnahme des Mediums 62 wird hierzu auf einem weiteren Halteelemente 36 (Fig. 2 - 2. von rechts) eine optisch transparente Kapillare als Reaktionsgefäß zur dynamischen Führung des Mediums 64 verwendet. Hierdurch bedarf der Skalierungsschritt von einer batch-Reaktion zu einer kontinuierlichen Prozessführung keines neuen Reaktionssetups und eine direkte Vergleichbarkeit beider Reaktionsführungen untereinander ist möglich. Ganz rechts ist in Fig. 2 ein Halteelemente 36 mit einer Haltestruktur 38 für ein als Küvette 66 ausgebildetes Reaktionsgefäß 30 gezeigt.

Die Fig. 3 zeigt ein Bodenelement 22 des Photoreaktors 10 in einer Teil-Schnittdarstellung. In dieser Darstellung ist neben dem Kühlfluideinlass 50 auch ein im Bodenelement 22 ausgebildetes Verteilungssystem (auch Kühlfluidstromteiler genannt) 68 erkennbar. Der Kühlfluideinlass 50 kann als Einlassstutzen mit sich daran anschließendem Einlasskanal bis zum Zentrum des Bodenelements 22 angesehen werden. Das Verteilungssystem 68 weist nun von dem Ende des Einlasskanals ausgehende Verteilerkanäle 70 auf, die in den Kühlfluid-Durchtritten 52 münden. Diese sind -wie gesagt- Ausgangspunkt für die im Grundkörper 14 ausgebildeten Kühlkanäle, die ihrerseits die Träger 48 passieren und in die Kühlfluidauslasse 54 münden. Mittels dieses "Luftstromteiler" genannten Verteilungssystems 68 wird ein einzelner Druckluftstrom gleichmäßig auf sechs Kanäle 70 aufgeteilt und über die Rückseiten der Träger 48 geleitet. Erst durch eine aufbauende Arbeitsweise, wie des 3D-Druckes, ist die Fertigung von derartigen inneren Kanalstrukturen möglich.

Die Fig. 4 zeigt weitere Details des Grundkörpers 14. Am Innenumfang 26 des Grundkörpers 14 sind Trägeraufnahmen 72 in Form von Einsteckschienen ausgebildet, in die die Träger 54 vom einen Ende 16 her einschiebbar sind. Vom Freiraum 28 aus gesehen verläuft jeweils hinter der Trägeraufnahme 72 (mit eingestecktem Träger 48) ein entsprechender Kühlkanal, der sich von einem zugeordneten Kühlfluiddurchtritt 52 bis zu dem entsprechenden Kühlfluidauslass 54 erstreckt.

Die Abmessungen (150x150x80 mm, 1.8 l) sowie das Gewicht (250 g) des Photoreaktors 10 aus dem hier gezeigten Beispiel erlauben einen einfachen Transport. Der Photoreaktor 10 ist also ein tragbarer Photoreaktor 10. Die bereits verfügbaren Photoreaktoren 10 wurden entweder nur für satz- oder chargenweise (batch Reaktionen) oder nur für kontinuierliche Reaktionen entwickelt. Die Verwendung eines flexibel anpassbaren Photoreaktors 10 bzw. eines Photoreaktorsystems mit Photoreaktor 10 und unterschiedlichen Haltestrukturen 38 und Reaktorgefäßen 30 und die mit ihm einhergehende Einbettung von satzweiser sowie kontinuierlicher Reaktionsführung in dasselbe System ist vollkommen neu. Durch den hier gezeigten Photoreaktor 10 bzw. das damit verbundene Photoreaktorsystem steht ein Setup bereit, welches durch seine geringen Produktionskosten sowie seine Anpassungsfähigkeit als Grundausstattung in einer Vielzahl von Laboren Einsatz finden kann.

### Bezugszeichen

- 10: Photoreaktor
- 12: Achse
- 14: Grundkörper
- 16: ein Ende
- 18: Trägerelement
- 20: anderes Ende
- 22: Bodenelement
- 24: LED-Beleuchtungskörper
- 26: Innenumfang
- 28: Freiraum
- 30: Reaktionsgefäß
- 32: Reflektorschirm
- 34: Aussparung
- 36: Halteelement
- 38: Haltestruktur
- 40: Deckelelement
- 42: Bajonett-Verschlussmechanismus
- 44: Hintergriff-Strukturen
- 46: Vorsprung-Struktur
- 48: Träger
- 50: Kühlfluideinlass
- 52: Kühlfluiddurchtritt
- 54: Kühlfluidauslass
- 56: Befestigungsklemme
- 58: Verschraubung
- 60: Magnetbefestigung
- 62: Reaktionsgefäß zur statischen Aufnahme des Mediums
- 64: Reaktionsgefäß zur dynamischen Führung des Mediums
- 66: Küvette
- 68: Verteilungssystem (Kühlfluidstromteiler)
- 70: Kühlkanal
- 72: Trägeraufnahme

## Patentansprüche

1. Photoreaktorsystem mit
- einem Satz von Halteelementen (36) zum Halten von unterschiedlich ausgestalteten Reaktionsgefäßen (30) für die statische Aufnahme eines Mediums und/oder die dynamische Führung eines Mediums und
- einem Photoreaktor (10) für strahleninduzierte Reaktionen in dem Medium, der einen sich entlang einer Achse (12) erstreckenden hülsenartigen Grundkörper (14),
eine Mehrzahl von LED-Beleuchtungskörpern (24), die am Innenumfang (26) des hülsenartigen Grundkörpers (14) umfänglich um die Achse (12) herum angeordnet sind und
einen von den LED-Beleuchtungskörpern (24) umfänglich umgebenen Freiraum (28) für mindestens eines der Reaktionsgefäße (30) aufweist,
wobei ein jedes der Halteelemente (36) aus dem Satz von Halteelementen (36) zum Halten des mindestens einen Reaktionsgefäßes (30) in den Freiraum (28) hinein über einen Bajonett-Verschlussmechanismus (42) an einem Ende (16) des Grundkörpers (14) lösbar befestigbar ist, und
wobei der Photoreaktor (10) eine mit Luft als Kühlfluid arbeitende Druckluft-Kühleinrichtung (50, 52, 54) für die LED-Beleuchtungskörper (24) mit im hülsenartigen Grundkörper (14) ausgebildeten Kühlkanälen für das Kühlfluid aufweist.

2. System nach Anspruch 1, **dadurch gekennzeichnet, dass** die Halteelemente (36) aus dem Satz von Halteelementen (36) als den Freiraum (28) an dem einen Ende (16) verschließende Deckelelemente (40) ausgebildet sind.

3. System nach Anspruch 1 oder 2, **dadurch gekennzeichnet, dass** am anderen Ende (20) des hülsenartigen Grundkörpers (14) ein den Freiraum (28) an diesem anderen Ende (20) verschließendes Bodenelement (22) des Photoreaktors (10) angeordnet ist.

4. System nach Anspruch 3, **dadurch gekennzeichnet, dass** im Bodenelement (22) ein Verteilungssystem (68) der Kühleinrichtung zur Verteilung des Kühlfluids auf die Kühlkanäle ausgebildet ist.

5. System nach einem der Ansprüche 3 bis 4, **dadurch gekennzeichnet, dass** die Kühleinrichtung (50, 52, 54) zumindest einen Strömungspfad für das Kühlfluid ausbildet, bei dem das Kühlfluid in Strömungsrichtung zunächst zur Kühlung von zumindest einem der LED-Beleuchtungskörper (24) an diesem vorbeigeführt wird und anschließend den Freiraum (28) passiert.

6. System nach einem der Ansprüche 1 bis 5, **dadurch gekennzeichnet, dass** der hülsenartigen Grundkörper (14) ein per 3D-Druckverfahren hergestellter Grundkörper (14) und/oder dass das Bodenelement (22) ein per 3D-Druckverfahren hergestelltes Bodenelement (22) ist.

7. System nach einem der Ansprüche 1 bis 6, **dadurch gekennzeichnet, dass** der Photoreaktor (10) einen zwischen den LED-Beleuchtungskörpern (24) und dem Freiraum (28) angeordneten rohrförmigen Reflektorschirm (32) aufweist, bei dem auf Höhe der einzelnen LED-Beleuchtungskörper (32) jeweils Aussparungen (34) ausgebildet sind.

## Claims

1. A photoreactor system comprising
- a set of holding elements (36) for holding differently configured reaction vessels (30) for the static reception of a medium and/or for the dynamic guidance of a medium, and
- a photoreactor (10) for radiation-induced reactions in the medium, which has a sleeve-like base body (14) extending along an axis (12),
a plurality of LED lighting bodies (24), which are arranged on the inner circumference (26) of the sleeve-like base body (14) circumferentially around the axis (12), and
a free space (28) circumferentially surrounded by the LED lighting bodies (24) for at least one of the reaction vessels (30),
wherein each of the holding elements (36) from the set of holding elements (36) is detachably attachable for holding the at least one reaction vessel (30) into the free space (28) via a bayonet locking mechanism (42) at one end (16) of the base body (14), and
wherein the photoreactor (10) has a compressed air cooling device (50, 52, 54) for the LED lighting bodies (24) that operates with air as the cooling fluid, with cooling channels for the cooling fluid formed in the sleeve-like base body (14).

2. The system according to claim 1, **characterized in that** the holding elements (36) from the set of holding elements (36) are configured as cover elements (40) closing the free space (28) at the one end (16).

3. The system according to claim 1 or 2, **characterized in that** a bottom element (22) of the photoreactor (10), which closes the free space (28) at this other end (20), is arranged at the other end (20) of the sleeve-like base body (14).

4. The system according to claim 3, **characterized in that** a distribution system (68) of the cooling device for distributing the cooling fluid to the cooling channels is formed in the bottom element (22).

5. The system according to any one of claims 3 to 4, **characterized in that** the cooling device (50, 52, 54) forms at least one flow path for the cooling fluid, in which the cooling fluid, in the direction of flow, is first guided past at least one of the LED lighting bodies (24) for cooling the latter and subsequently passes through the free space (28).

6. The system according to any one of claims 1 to 5, **characterized in that** the sleeve-like base body (14) is a base body (14) manufactured by a 3D printing method and/or that the bottom element (22) is a bottom element (22) manufactured by a 3D printing method.

7. The system according to any one of claims 1 to 6, **characterized in that** the photoreactor (10) has a tubular reflector screen (32) arranged between the LED lighting bodies (24) and the free space (28), in which recesses (34) are formed at the level of each individual LED lighting bodies (32).

## Revendications

1. Système de photoréacteur avec
- un ensemble d'éléments de maintien (36) destiné à maintenir des récipients de réaction (30) de configuration différente pour la réception statique d'un milieu et/ou le guidage dynamique d'un milieu, et
- un photoréacteur (10) pour des réactions induites par rayonnement dans le milieu, lequel comporte un corps principal (14) en forme de manchon s'étendant le long d'un axe (12),
une multitude de corps d'éclairage à DEL (24), qui sont disposés tout autour de l'axe (12) en périphérie sur la périphérie intérieure (26) du corps principal (14) en forme de manchon et
un espace libre (28) pour au moins un des récipients de réaction (30) entouré en périphérie par les corps d'éclairage à DEL (24),
chacun des éléments de maintien (36) de l'ensemble d'éléments de maintien (36) destiné à maintenir l'au moins un récipient de réaction (30) dans l'espace libre (28) pouvant être fixé de manière amovible sur une extrémité (16) du corps principal (14) par un mécanisme de fermeture à baïonnette (42), et
le photoréacteur (10) comportant un dispositif de refroidissement à air comprimé (50, 52, 54), fonctionnant avec de l'air comme fluide de refroidissement, pour les corps d'éclairage à DEL (24) avec des canaux de refroidissement pour le fluide de refroidissement formés dans le corps principal (14) en forme de manchon.

2. Système selon la revendication 1, **caractérisé en ce que** les éléments de maintien (36) de l'ensemble d'éléments de maintien (36) sont réalisés sous la forme d'éléments de recouvrement (40) fermant l'espace libre (28) sur une extrémité (16).

3. Système selon la revendication 1 ou 2, **caractérisé en ce qu'**un élément de fond (22) du photoréacteur (10) fermant l'espace libre (28) sur l'autre extrémité (20) est disposé sur ladite autre extrémité (20) du corps principal (14) en forme de manchon.

4. Système selon la revendication 3, **caractérisé en ce qu'**un système de distribution (68) du dispositif de refroidissement destiné à distribuer le fluide de refroidissement sur les canaux de refroidissement est formé dans l'élément de fond (22).

5. Système selon l'une des revendications 3 à 4, **caractérisé en ce que** le dispositif de refroidissement (50, 52, 54) forme au moins un trajet d'écoulement pour le fluide de refroidissement, dans lequel le fluide de refroidissement est guidé d'abord le long d'au moins un corps d'éclairage à DEL (24) pour le refroidissement de celui-ci dans la direction d'écoulement puis traverse l'espace libre (28).

6. Système selon l'une des revendications 1 à 5, **caractérisé en ce que** le corps principal (14) en forme de manchon est un corps principal (14) fabriqué par un procédé d'impression 3D et/ou que l'élément de fond (22) est un élément de fond (22) fabriqué par un procédé d'impression 3D.

7. Système selon l'une des revendications 1 à 6, **caractérisé en ce que** le photoréacteur (10) comporte un écran réflecteur (32) tubulaire disposé entre les corps d'éclairage à DEL (24) et l'espace libre (28), dans lequel des évidements (34) sont respectivement formés à la hauteur des divers corps d'éclairage à DEL (32).
